# EUROPÄISCHE PATENTSCHRIFT

(11) **EP 1 728 121 B1**
(45) Veröffentlichungstag und Bekanntmachung des Hinweises auf die Patenterteilung: **08.09.2010**
(21) Anmeldenummer: 05736387.1
(22) Anmeldetag: 15.03.2005
(51) Int. Cl.: G03B 13/08, G03B 17/20, G02B 26/08

(54) **VERFAHREN ZUR STEUERUNG EINES AUS EINEM FILMAUFNAHMESTRAHLENGANG EINER LAUFBILDKAMERA ABGEZWEIGTEN ABBILDUNGSSTRAHLENGANGES**
METHOD FOR CONTROLLING AN IMAGE FILM PATH DEVIATED FROM THE FILM RECORDING OPTICAL PATH OF A FILM CAMERA
PROCEDE DE COMMANDE D'UN FAISCEAU DE REPRODUCTION DEVIE D'UN TRAJET OPTIQUE DE PRISE DE VUES D'UNE CAMERA DE PRISE DE VUES

(30) Priorität: 26.03.2004 DE 102004016224
(43) Veröffentlichungstag der Anmeldung: 06.12.2006
(73) Patentinhaber: ARNOLD & RICHTER CINE TECHNIK GMBH & CO. BETRIEBS KG, 80799 München (DE)
(72) Erfinder: HAUBMANN, Michael, A-1230 Wien (AT)
(74) Vertreter: Ninnemann, Detlef
(86) Internationale Anmeldenummer: PCT/DE2005/000498
(87) Internationale Veröffentlichungsnummer: WO 2005/096092

(56) Entgegenhaltungen:
- US-A- 4 101 916
- US-A- 5 552 845
- US-B1- 6 308 014
- PATENT ABSTRACTS OF JAPAN Bd. 1998, Nr. 05, 30. April 1998 (1998-04-30) -& JP 10 010633 A (OLYMPUS OPTICAL CO LTD), 16. Januar 1998 (1998-01-16) in der Anmeldung erwähnt
- PATENT ABSTRACTS OF JAPAN Bd. 1996, Nr. 03, 29. März 1996 (1996-03-29) & JP 07 306444 A (NIKON CORP), 21. November 1995 (1995-11-21)

## Beschreibung

Die Erfindung bezieht sich auf ein Verfahren zur Steuerung eines aus einem Filmaufnahmestrahlengang einer Laufbildkamera abgezweigten Abbildungsstrahlenganges gemäß dem Oberbegriff des Anspruchs 1 sowie auf eine Vorrichtung zur Durchführung des Verfahrens.

Aus der DE 27 34 792 C2 ist ein Suchersystem für eine Laufbildkamera mit einer mit der Transportgeschwindigkeit eines Laufbildfilms synchronisierten rotierenden Spiegelblende bekannt, die den von einem Aufnahmeobjektiv der Laufbildkamera zur Filmebene verlaufenden Aufnahmestrahlengang periodisch unterbricht und in einen Sucherstrahlengang abzweigt, so dass ein Abbild der aufzunehmenden Szene abwechselnd entweder in einer Belichtungsphase auf den Laufbildfilm projiziert oder in einer Belichtungspause von der rotierenden Spiegelblende in den Sucherstrahlengang abgelenkt wird. Im Sucherstrahlengang liegt in der gleichen Entfernung von der reflektierenden Oberfläche der rotierenden Spiegelblende wie die Filmebene eine Bildebene, wo das Sucherbild in der Belichtungspause von einer Übertragungsoptik als reelles Bild in die Ebene einer Bildfeldblende abgebildet wird und durch ein Okular betrachtet werden kann.

Aus der US 4 101 916 A ist eine Suchereinrichtung für eine Laufbildkamera mit einer im Filmaufnahme-Strahlengang angeordneten rotierenden Spiegelblende bekannt, die einen Spiegelsektor aufweist, der den von einem Kameraobjektiv zur Filmebene der Laufbildkamera verlaufenden Filmaufnahme-Strahlengang periodisch unterbricht und in einen Sucherstrahlengang abzweigt. Befindet sich dagegen der Spiegelsektor nicht im Filmaufnahme-Strahlengang, so wird ein Abbild des aufzunehmenden Objekts zur Filmbelichtung auf den Laufbildfilm projiziert. Im Sucherstrahlengang ist eine Mattscheibe mit rechteckigen Formateinzeichnungen zur Angabe der Filmbildgrenzen angeordnet, auf der in den Belichtungspausen ein Sucherbild des aufzunehmenden Objekts abgebildet wird. Um die Formateinzeichnung auch bei ungünstigen Lichtverhältnissen deutlich erkennbar zu machen, ist im Abstand zur Mattscheibe ein Strahlenteiler vorgesehen, dessen Ebene unter einem Winkel zum Sucherstrahlengang verläuft und den Sucherstrahlengang zur Betrachtung des auf die Mattscheibe abgebildeten Sucherbildes in ein Okular ablenkt. Auf der der Mattscheibe entgegen gesetzten Seite des Strahlenteilers ist eine Lampe angeordnet, deren Lichtstrahlen durch den Strahlenteiler hindurch die Formateinzeichnungen beleuchten und damit auch bei ungünstigen Lichtverhältnissen deutlich erkennbar machen.

Um den Kontrastumfang eines Aufnahmebildes besser beurteilen und Streulicht sowie Lichtreflexe leichter erkennen zu können, ist es aus den Seiten 42 und 43 der Bedienungsanleitung der Laufbildkamera ARRIFLEX 535 bekannt, eine Laufbildkamera mit Kontrastfiltem auszurüsten, die mittels eines Hebels in den Sucherstrahlengang einer Laufbildkamera geschwenkt werden können und dadurch die Qualität der Betrachtung des Aufnahmebildes stufenweise verändern.

Aus der JP 10010633 A ist eine Sucheranordnung für eine Stehbildkamera bekannt, bei der im Sucherstrahlengang ein DMD-(Digital Micromirror Device)-Chip angeordnet ist, der eine Vielzahl von zweidimensional angeordneten Mikrospiegelelementen aufweist, die aus beweglich angelenkten Mikrospiegeln bestehen, die beim Anlegen einer Spannung digital den Anlenkwinkel verändern, d.h. zwischen zwei unterschiedlichen Ausrichtungen der Spiegelfläche verschwenkt werden können. Der im Sucherstrahlengang angeordnete DMD-Chip wird von einer DMD-Treiberschaltung angesteuert und blendet entweder die über ein Objektiv empfangenen Aufnahmestrahlen oder die von einem Display abgegebene Information in den Sucherstrahlengang, so dass entweder ein aufzunehmendes Objekt oder die Displayinformation durch den Sucher betrachtet werden kann. Das Display und die den DMD-Chip ansteuernde Treiberschaltung werden von einer gemeinsamen CPU angesteuert.

Dieses bekannte Suchersystem eignet sich jedoch nicht für die Einblendung von Formateinzeichnungen in das Sucherbild einer Laufbildkamera sowie die Überlagerung bzw. gleichzeitige Einblendung aufnahmespezifischer oder kameraspezifischer Daten in ein Sucherbild zusammen mit dem aus einem Aufnahmestrahlengang abgezweigten Sucherstrahlengang, da die in den Sucherstrahlengang eingeblendeten Display-Informationen vom Display eingespiegelt, nicht aber durch die Stellung oder Ablenkung der Mikrospiegel bestimmt wird.

Weiterhin ist es bekannt, DMD-Chips mit wechselnder Frequenz anzusteuern, so dass in Abhängigkeit vom Verhältnis der Ein- und Ausschaltzeiten die Graustufen bei der Lichtübertragung mittels des DMD-Chips verändert werden können, d.h. bei größeren Einschaltzeiten als Ausschaltzeiten eine hellere Graustufe übertragen wird, während bei einer Vergrößerung der Ausschaltzeiten gegenüber den Einschaltzeiten dunklere Graustufen übertragen werden.

Aus der JP 10 010633 A ist eine Sucheranordnung für eine Kamera bekannt, bei der im Aufnahmestrahlengang ein Klappspiegel angeordnet ist, der in einer ersten Stellung den Aufnahmestrahlengang zur Filmbelichtung freigibt und in einer zweiten Stellung den Aufnahmestrahlengang als Sucherstrahlengang auf ein DMD mit einer Vielzahl zweidimensional angeordneter Mikrospiegelelemente ablenkt, die in Abhängigkeit von einer angelegten Spannung in einem bestimmten Winkel um eine Achse schwenkbar sind. Die Spiegelflächen der Mikrospiegel des DMD werden abwechselnd auf den Sucherstrahlengang oder auf den Strahlengang eines von einer CPU angesteuerten Displays gerichtet, das für eine Bildbeurteilung dienende Daten, Formateinzeichnungen oder dergleichen abbildet, so dass der vom Objekt ausgehende Aufnahmestrahlengang und der vom Display ausgehende Displaystrahlengang ohne Helligkeitsreduzierung abwechselnd in den Kamerasucher gelenkt werden.

Die bekannte Suchereinrichtung mit einem DMD bewirkt daher mit der abwechselnden Ablenkung des Aufnahmestrahlengangs und des Displaystrahlengangs in den Sucherstrahlengang eine für den Betrachter gleichzeitig erscheinende Überlagerung sowohl der Bildinformationen als auch der vom Display abgegebenen Informationen. Die Lichtmenge des in den Sucher abgelenkten Sucherstrahlenganges hängt von der Helligkeit des Aufnahmestrahlenganges und der Helligkeit des Displaystrahlengangs sowie von der Dauer der Ausrichtung des DMD auf das Display bzw. auf den Aufnahmestrahlengang ab. Dabei ist eine Beeinflussung der in den Sucher abgegebenen Sucherstrahlen durch das DMD nur in der Weise möglich, dass eine Erhöhung des Anteils der Aufnahmestrahlen mit einer entsprechenden Verringerung der Displaystrahlen verbunden ist.

Ein weiteres Problem bei der Bedienung von Laufbildkameras besteht darin, dass die Gefahr des Eindringens von Streulicht über das Okular und den Sucherstrahlengang in die Laufbildkamera und damit in den Aufnahmestrahlengang mit der Folge einer ungewollten Belichtung des Laufbildfilmes besteht, wenn das Okular beispielsweise durch das Auge des Kameramanns nicht abgedeckt ist. Um ein derart ungewolltes Belichten des Laufbildfilmes mittels Streulicht zu verhindern, sind aufwändige und Platz beanspruchende Maßnahmen erforderlich.

Aufgabe der vorliegenden Erfindung ist es, ein Verfahren der eingangs genannten Art anzugeben, mit dem der Kontrast des Sucherbildes stufenlos einstellbar ist und gewährleistet wird, dass auch bei unbedecktem Sucherokular kein Streulicht auf den Laufbildfilm gelangt.

Diese Aufgabestellung wird erfindungsgemäß durch die Merkmale der Ansprüche 1 oder 2 gelöst.

Die erfindungsgemäße Lösung ermöglicht eine stufenlose Einstellung der Bildhelligkeit bzw. des Bildkontrastes eines Sucher- oder Videoausspiegelungsbildes und verhindert, dass unabhängig von der Abdeckung eines Suchers Streulicht über den Sucherstrahlengang auf einen Laufbildfilm in einer Laufbildkamera gelangt.

Die erfindungsgemäße Lösung macht insbesondere die optischen Möglichkeiten eines als DMD-Chip ausgebildeten optischen Schaltelements für die Bildbetrachtung durch den Sucher einer Laufbildkamera nutzbar, indem sie die in das Okular einer Laufbildkamera während der Belichtungspausen des Laufbildfilmes in den Sucherstrahlengang abgelenkte Lichtmenge steuert und damit sowohl eine bessere Beurteilung des Kontrastumfangs im Aufnahmebild ermöglicht als auch das Erkennen von Streulicht und Lichtreflexen erleichtert. Durch eine mit der Bildaufnahmefrequenz der Laufbildkamera synchronisierte Ansteuerung des optischen Schaltelements kann darüber hinaus das Eindringen von Streulicht über den Sucherstrahlengang in die Laufbildkamera und damit auf den Laufbildfilm verhindert werden.

Durch eine Veränderung des Tastverhältnisses der Ablenkung des Abbildungsstrahlengangs in die verschiedenen Abbildungsebenen kann sowohl der Kontrast bei der Bildbetrachtung durch den Sucher der Laufbildkamera stufenlos verändert werden als auch ein zusätzlicher Videostrahlengang zur Betrachtung und Aufzeichnung des Aufnahmebildes auf einem Videomonitor oder Videoaufzeichnungsgerät abgezweigt und die in den Videostrahlengang abgezweigte Lichtmenge gesteuert werden.

Die Veränderung des Tastverhältnisses der Ablenkung des Abbildungsstrahlengangs erfolgt insbesondere durch eine pulsbreitenmodulierte Steuerung des optischen Schaltelements.

Der Abbildungsstrahlengang kann entweder als Sucherstrahlengang der Laufbildkamera in eine durch ein Okular zu betrachtende Bildebene oder in eine Lichtfalle, als Videostrahlengang der Laufbildkamera zu einem optoelektronischen Wandler zur Umwandlung des Videostrahlengangs in Videosignale oder in eine Lichtfalle bzw. sowohl in einen Sucherstrahlengang mit einer durch ein Okular zu betrachtenden Bildebene als auch in einen Videostrahlengang mit einem optoelektronischen Wandler zur Umwandlung des Videostrahlengangs in Videosignale der Laufbildkamera bzw. in eine Lichtfalle abgelenkt werden.

Um eine Belichtung des Laufbildfilms durch Streulicht bei vom Sucher der Laufbildkamera entfernten Auge bzw. nicht abgedeckten Sucher zu verhindern, wird der Abbildungsstrahlengang synchron zur Belichtungsphase des Laufbildfilmes entweder unterbrochen oder von der durch das Okular zu betrachtenden Bildebene in die Lichtfalle abgelenkt. Dadurch wird zusätzlich zum stufenlos variabel einstellbaren Kontrastfilter ein elektronischer Verschluss im Sucherstrahlengang einer Laufbildkamera geschaffen, der wirksam eine Fehlbelichtung des Laufbildfilmes durch Licht verhindert, das über den Sucherstrahlengang in das Kamerainnere gelangt.

Eine Vorrichtung zur Durchführung des Verfahrens ist durch mindestens einen im Abbildungsstrahlengang der Laufbildkamera angeordneten DMD-(Digital Micromirror Device)-Chip mit einer Vielzahl rasterförmig angeordneter Mikrospiegel, die elektronisch gesteuert verschwenkbar sind und den einfallenden Abbildungsstrahlengang zu einer ersten oder einer zweiten Abbildungsebene oder in eine Lichtfalle ablenken, gekennzeichnet.

Mit der erfindungsgemäßen Vorrichtung wird ein als DMD-Chip ausgebildetes optisches Schaltelement als stufenlos veränderbarer Kontrastfilter und Streulichtfilter eingesetzt. Weiterhin kann der DMD-Chip als optisches Schaltelement zur Vermeidung des Eindringens von Streulicht in den Aufnahmestrahlengang sowie zur Steuerung der in einen Sucherstrahlengang und/oder in einen Videostrahlengang einer Laufbildkamera eingekoppelten Lichtmenge dienen.

Diese Funktionen werden dadurch ausgeführt, dass die Mikrospiegel eines ersten DMD-Chips den Abbildungsstrahlengang abwechselnd zu einer Abbildungsoptik in einen Sucherstrahlengang oder in einen Strahlengang einer ersten Lichtfalle reflektieren und/oder die Mikrospiegel eines zweiten DMD-Chips den Abbildungsstrahlengang abwechselnd zu einem Videostrahlengang mit einem optoelektronischen Wandler zur Umwandlung des Videostrahlengangs in Videosignale oder in einen Strahlengang einer zweiten Lichtfalle ablenken.

In einer Ausführungsform wird der Abbildungsstrahlengang über einen Strahlenteiler in einen Sucherstrahlengang und einen Videostrahlengangs aufgeteilt, wobei die Mikrospiegel des im Sucherstrahlengang angeordneten ersten DMD-Chips den Abbildungsstrahlengang zur Abbildungsoptik im Sucherstrahlengang mit einer durch ein Okular zu betrachtenden Bildebene oder in den Strahlengang der ersten Lichtfalle reflektieren und wobei die Mikrospiegel des zweiten DMD-Chips den Abbildungsstrahlengang zum Videostrahlengang mit einem optoelektronischen Wandler zur Umwandlung des Videostrahlengangs in Videosignale oder in den Strahlengang der zweiten Lichtfalle ablenken.

Alternativ kann der Strahlenteiler zwischen dem ersten DMD-Chip und dem Sucherokular angeordnet werden und den Abbildungsstrahlengang in einen Sucherstrahlengang und einen Videostrahlengang aufteilen, wobei die Mikrospiegel des ersten DMD-Chips zur Lichtsteuerung den Abbildungsstrahlengang abwechselnd zum Strahlenteiler oder in den Strahlengang der ersten Lichtfalle reflektieren.

In dieser Ausführungsvariante können die Mikrospiegel eines zweiten DMD-Chips zur Lichtsteuerung den Videostrahlengang zu einem optoelektronischen Wandler zur Umwandlung des Videostrahlengangs in Videosignale oder in einen Strahlengang einer zweiten Lichtfalle ablenken.

Vorzugsweise erfolgt die Ansteuerung des bzw. der DMD-Chips über eine Treiberschaltung, die mit einer Steuerschaltung der Laufbildkamera bzw. der Videoausspiegelung verbunden ist. Dies ermöglicht nicht nur eine Steuerung der in den Sucherstrahlengang oder Videostrahlengang eingekoppelten Lichtmengen, sondern auch eine Synchronisation mit der Bildaufnahmefrequenz der Laufbildkamera und/oder der Videofrequenz der Videoausspiegelungseinrichtung.

Weitere Merkmale der Erfindung und der mit der erfindungsgemäßen Lösung erzielbaren Vorteile sollen anhand von Ausführungsbeispielen erläutert werden, die in der Zeichnung dargestellt sind. Es zeigen:
- Fig. 1: eine schematische Darstellung eines Filmaufnahme- und Abbildungsstrahlen- gangs einer Laufbildkamera mit einem DMD-Chip zur Ablenkung des Abbil- dungsstrahlengangs in den Sucherstrahlengang der Laufbildkamera oder in eine Lichtfalle;
- Fig. 2: eine schematische Darstellung eines Filmaufnahme- und Abbildungsstrahlen- gangs einer Laufbildkamera mit einem Strahlenteiler zur Ablenkung des Abbil- dungsstrahlengangs in einen Sucherstrahlengang und einen Videostrahlen- gang mit jeweils einem DMD-Chip zur Lichtsteuerung und
- Fig. 3: eine schematische Darstellung eines Filmaufnahme- und Abbildungsstrahlen- gangs einer Laufbildkamera mit einem DMD-Chip zur Lichtsteuerung und ei- nem Strahlenteiler zur Ablenkung des Abbildungsstrahlengangs in einen Su- cherstrahlengang und einen Videostrahlengang.

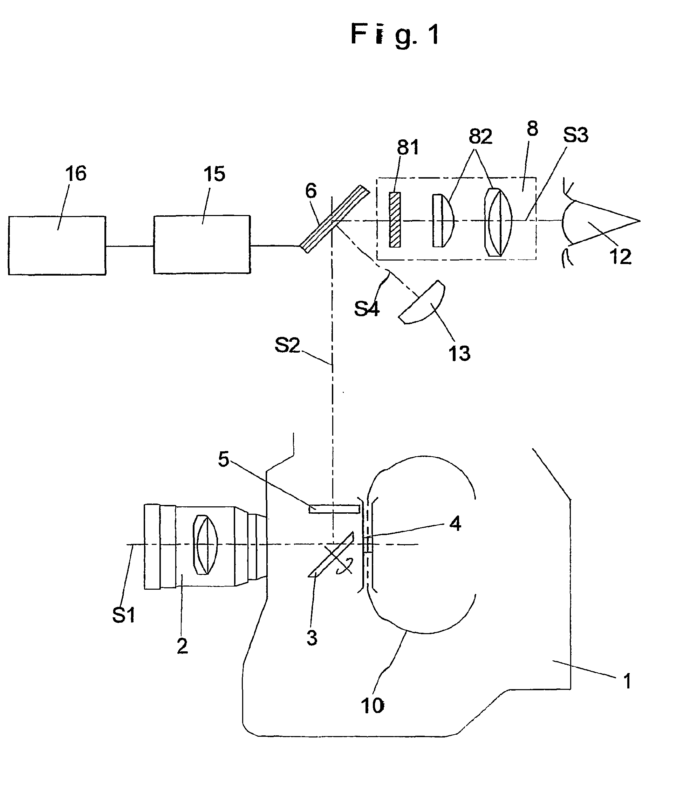

Fig. 1 zeigt in schematischen Umrissen eine Laufbildkamera 1 mit einer rotierenden Spiegelblende 3, die den über ein Kameraobjektiv 2 geleiteten Aufnahmestrahlengang S1 in einer Belichtungsphase zu einem in einer Filmebene hinter einem Bildfenster 4 bewegten Laufbildfilm 10 zur Filmbildbelichtung durchlässt oder periodisch in einen Abbildungsstrahlengang S2 ablenkt. Im Abbildungsstrahlengang S2 ist eine Faserplatte oder eine beispielsweise als plankonvexe Linse ausgebildete Mattscheibe 5 angeordnet, die sich in der Bildebene, d.h. im gleichen Abstand zur rotierenden Spielgeblende 3 befindet, wie die Filmebene, in der der Laufbildfilm 10 intermittierend transportiert wird.

Das auf der Mattscheibe oder Faserplatte 5 in den Bel ichtungspausen des Laufbildfilmes 10 abgebildete Aufnahmebild wird mittels eines DMD-Chips 6 entweder in einen Sucherstrahlengang S3 oder in einen Strahlengang S4 abgelenkt, der zu einer Lichtfalle 13 führt. Der DMD-Chip 6 weist eine Vielzahl raster- oder matrixförmig angeordneter und mittels einer Treiberschaltung 15 schnell ansteuerbarer Mikro-Kippspiegel auf einem Halbleitersubstrat auf, die je nach Ansteuerung durch die Treiberschaltung 15 zwischen zwei Endstellungen, die einen Winkel von beispielsweise 10 bis 12 Grad einschließen, verschwenkt werden. Durch die raster- oder matrixförmige Anordnung der Mikrospiegel des DMD-Chips 6 entspricht jeder Mikrospiegel einem Bildpixel, so dass ein dem DMD-Chip 6 von der Treiberschaltung 15 zur Ansteuerung der Mikrospiegel zugeführter Bildcode jeden einzelnen Mikrospiegel initiiert und dementsprechend in der Ruhestellung lässt oder in eine Auslenkstellung ablenkt.

Eingangsseitig ist die Treiberschaltung 15 mit einer Steuerschaltung 16 und diese mit einer Eingabetastatur, Kamera- oder Bildaufnahmesensoren verbunden bzw. Teil eines Mikroprozessors der Laufbildkamera 1 zur Steuerung von Kamerafunktionen und Verarbeitung von eingegebenem oder sensorisch erfassten Daten.

Das Sucherokular 8 enthält eine Einstellscheibe 81 in Form einer Mattscheibe oder Faserplatte, wo ein Sucherbild abgebildet wird, das über eine Sucheroptik 82 vom Auge 12 eines Kameramanns betrachtet werden kann.

Das Eingabefeld der Laufbildkamera 1 enthält einen Sollwertgeber bzw. ein Stellglied, mit dem die Zeitdauer der Ablenkung des Abbildungsstrahlengangs S2 in den Sucherstrahlengang S3 während der Belichtungspause des Laufbildfilms 10 und damit die in den Sucherstrahlengang S3 eingekoppelte Lichtmenge eingestellt werden kann. Damit kann der Kameramann Streulichteinflüsse und Lichtreflexionen im Aufnahmebild ausblenden und insbesondere den Kontrastumfang im Aufnahmebild optimieren, wobei mit der stufenlosen Einstellung des Stellgliedes eine stufenlose Änderung des Tastverhältnisses der Mikrospiegel des DMD-Chips 6 verbunden ist, mit dem die Mikrospiegel zwischen dem Sucherstrahlengang S3 und dem Strahlengang S4 der Lichtfalle 13 verschwenkt werden.

Die Treiberschaltung 15 steuert den DMD-Chip 6 in der Weise an, dass während der Bildbelichtungspause die Mikrospiegel des DMD-Chips 6 mit hoher Frequenz zwischen dem Sucherstrahlengang S3 und dem Strahlengang S4 der Lichtfalle 13 hin- und hergeschwenkt werden und durch Veränderung des Tastverhältnisses mittels Pulsbreitenmodulation die in den Sucherstrahlengang S3 einerseits und den Strahlengang S4 der Lichtfalle 13 andererseits eingespiegelte Lichtmenge des Abbildungsstrahlengangs S2 stufenlos verändert wird.

Um eine Belichtung des Laufbildfilms 10 durch Streulicht vom Okular 8 entfernten Auge 12 bzw. bei nicht abgedecktem Sucherokular 8 zu verhindern, wird der DMD-Chip 6 von der Steuerschaltung 16 über die Treiberschaltung 15 so angesteuert, dass der Sucherstrahlengang S3 während der Belichtungsphase des Laufbildfilms 10 synchron unterbrochen wird, so dass während der Belichtungsphase des Laufbildfilms 10 die Mikrospiegel des DMD-Chips 6 den Abbildungsstrahlengang S2 in den Strahlengang S4 der Lichtfalle 13 ablenken und damit die von der Sucheroptik 8 in die Laufbildkamera 1 gelangenden Lichtstrahlen ausblenden.

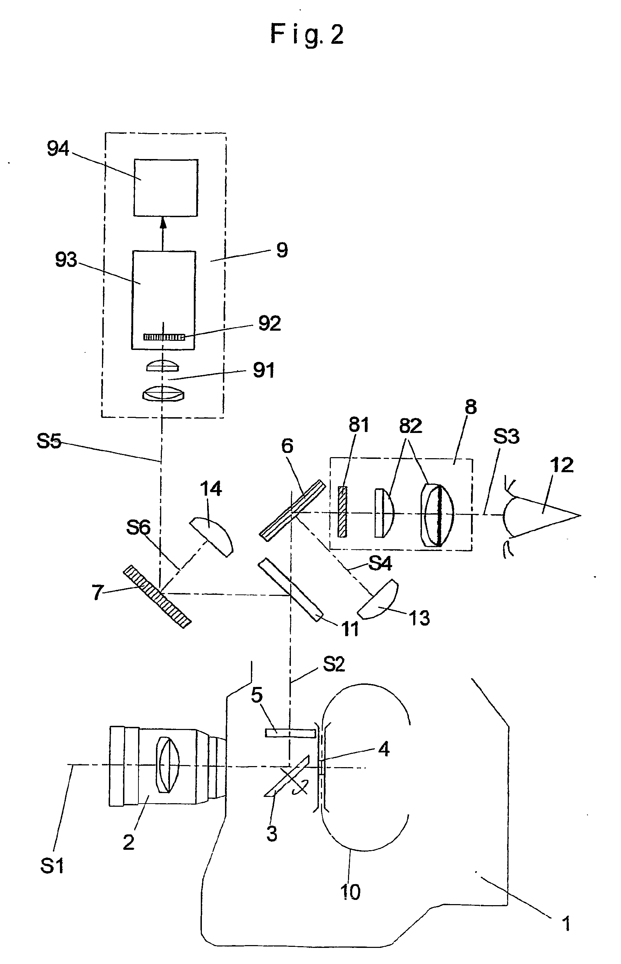

Die Anordnung gemäß Fig. 1 kann in analoger Weise um eine Videoausspiegelungseinrichtung 9 gemäß Fig. 2 erweitert werden, deren Aufgabe und Funktion nachstehend näher erläutert werden soll.

Fig. 2 zeigt in Übereinstimmung mit der schematischen Darstellung eines Filmaufnahme- und Abbildungsstrahlengangs gemäß Fig. 1 eine Laufbildkamera 1 mit einer rotierenden Spiegelblende 3, die den über ein Kameraobjektiv 2 geleiteten Aufnahmestrahlengang S1 entweder zu einem in einer Filmebene hinter einem Bildfenster 4 bewegten Laufbildfilm 10 zur Filmbildbelichtung durchlässt oder in einen Abbildungsstrahlengang S2 ablenkt. Im Abbildungsstrahlengang S2 ist eine Mattscheibe 5, auf der in den Belichtungspausen des Laufbildfilmes 10 ein Aufnahmebild abgebildet wird, sowie ein Strahlenteiler 13 angeordnet, durch den der Abbildungsstrahlengang S2 in einen Sucherstrahlengang S3 und in einen Videostrahlengang S5 aufgeteilt wird.

Mittels eines im Sucherstrahlengang S3 angeordneten ersten DMD-Chips 6 wird der Sucherstrahlengang S3 entweder in ein Sucherokular 8 oder in einen Strahlengang S4 abgelenkt, der zu einer ersten Lichtfalle 13 führt.

Der erste DMD-Chip 6 weist eine Vielzahl raster- oder matrixförmig angeordneter schnell ansteuerbarer Mikrospiegel auf, die zwischen zwei Endstellungen, die einen Winkel von beispielsweise 10 bis 12 Grad einschließen, verschwenkt werden.

Das Sucherokular 8 enthält eine Einstellscheibe 81 in Form einer Mattscheibe oder Faserplatte, wo ein Sucherbild abgebildet wird, das über eine S ucheroptik 82 vom Auge 12 eines Kameramanns betrachtet werden kann.

In dem vom Abbildungsstrahlengang S2 abgeteilten Videostrahlengang S5 ist ein zweiter DMD-Chip 7 angeordnet, der ebenfalls eine Vielzahl raster- oder matrixförmig angeordneter schnell ansteuerbarer Mikrospiegel aufweist, die zwischen zwei Endstellungen, die einen Winkel von beispielsweise 10 bis 12 Grad einschließen, verschwenkt werden, und der den Videostrahlengang S5 entweder zu einer Videoaussp iegelungseinrichtung 9 oder als Strahlengang S6 zu einer zweiten Lichtfalle 14 lenkt.

Die Videoausspiegelungseinrichtung 9 enthält eine Videooptik 91, einen Videosensor 92, der das optische Bild des Strahlenganges S5 in Bildsignale umwandelt, und einer Videoelektronik 93, die aus den Bildsignalen Videosignale erzeugt und diese sowie gegebenenfalls weitere Steuersignale und Daten an einen Personal Computer abgibt sowie Steuer- und Datensignale vom Personal Computer empfängt. Da der aus dem Abbildungsstrahlengang S2 mittels des Strahlenteilers 11 abgelenkte Videostrahlengang S5 über den zweiten DMD-Chip 7 geführt wird, ist das Aufnahmebild im Strahlengang zur Videoausspiegelungseinrichtung 9 seitenverkehrt, so dass zur korrekten Bildwiedergabe in der Videoausspiegelungseinrichtung 9 eine Spiegelung auf elektronischem Wege vorgenommen wird.

Die Videoelektronik 93 bietet die Möglichkeit zum Anschluss eines Monitors 94, auf dem die aus den Videosignalen zusammengesetzten Videobilder unmittelbar an der Laufbildkamera 1 betrachtet werden können.

Je nach Winkelstellung der rotierenden Spiegelblende 3 trifft der Aufnahmestrahlengang S1 auf den Öffnungssektor (Hellsektor) der rotierenden Spiegelblende 3 und fällt durch das Bildfenster 4 auf den im Filmkanal geführten Laufbildfilm 10, während beim Transports des Laufbildfilms 10 das Bildfenster 4 durch die Spiegelfläche der rotierenden Spiegelblende 3 abgedeckt wird und der Aufnahmestrahlengang S1 als Abbildungsstrahlengang S2 auf die Mattscheibe oder Faserplatte 5 abgelenkt wird, von wo aus der Abbildungsstrahlengang S2 über den Strahlenteiler 11 in den Sucherstrahlengang S3 und den Videostrahlengang S5 aufgeteilt wird. Der auf den ersten DMD-Chip 6 fallende Sucherstrahlengang S3 wird über dessen Mikrospiegel entweder zum Sucherokular 8 oder als Strahlengang S4 zur ersten Lichtfalle 13 abgelenkt.

Der vom Strahlenteiler 11 abgeleitete Videostrahlengang S5 fällt auf den zweiten DMD-Chip 7 und wird von diesem entweder zur Videoausspiegelungseinrichtung 9 oder als Strahlengang S6 zur zweiten Lichtfalle 14 abgelenkt. Wegen der periodischen Unterbrechung des Aufnahmestrahlenganges S1 wird der Videoausspiegelungseinrichtung 9 neben einem Mode-Select-Signal, das einen gewünschten Belichtungsmodus vorgibt, ein Blendenindexsignal von der Laufbildkamera vorgegeben, das den jeweiligen Belichtungsverhältnissen des Videostrahlenganges S5 und damit den Belichtungsverhältnissen auf dem Videoensor 92 entspricht.

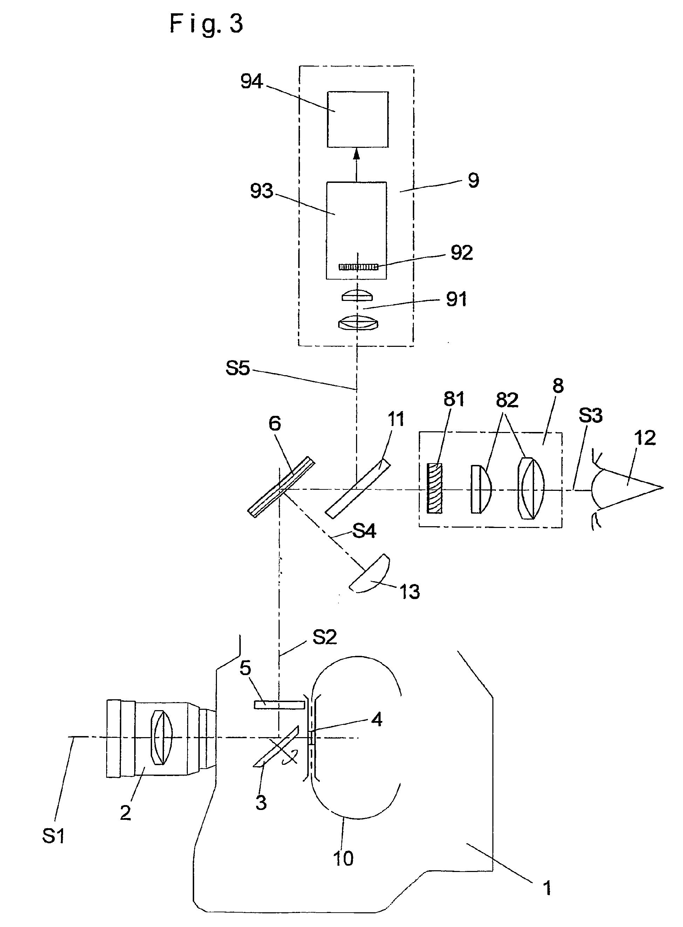

In Fig. 3 ist eine alternative Ausführungsform dargestellt, bei der der Strahlenteiler 11 zwischen dem ersten DMD-Chip 6 und der Einstellscheibe 81 des Sucherokulars 8 angeordnet ist, so dass der Abbildungsstrahlengang S2 entweder in den kombinierten Sucher- und Videostrahlengang S3 bzw. S5 oder zur ersten Lichtfalle 13 reflektiert wird. Die in den Sucher- und Videostrahlengang S3 bzw. S5 abgelenkte Lichtmenge ist in dieser Ausführungsform gleich bzw. hängt vom Teilungsverhältnis des Strahlenteilers 11 ab, der auch mit unterschiedlichen Reflektions- oder Durchlassbereichen versehen sein kann, so dass eine geeignete Bildbetrachtung durch das Okular 8 und Videoausspiegelung gewährleistet ist

In dieser Ausführungsform kann entweder der zweite DMD-Chip 7 entfallern, so dass der Videostrahlengang dem Sucherstrahlengang entspricht, oder es wird ein zweiter DMD-Chip 7 in Verbindung mit einer zweiten Lichtfalle 14 wie in der Ausführung sform gemäß Fig. 2 vorgesehen.

### Bezugszeichenliste

- 1: Laufbildkamera
- 2: Kameraobjektiv
- 3: Rotierende Spielgeblende
- 4: Bildfenster
- 5: Mattscheibe
- 6: erster DMD-Chip
- 7: zweiter DMD-Chip
- 8: Sucherokular
- 9: Videoausspiegelungseinrichtung
- 10: Laufbildfilm
- 11: Strahlenteiler
- 12: Auge
- 13: Erste Lichtfalle
- 14: Zweite Lichtfalle
- 91: Videooptik
- 92: Videosensor
- 93: Videoelektronik
- 94: Monitor
- S1: Aufnahmestrahlengang
- S2: Abbildungsstrahlengang
- S3: Sucherstrahlengang
- S4: Strahlengang zur ersten Lichtfalle
- S5: Videostrahlengang
- S6: Strahlengang zur zweiten Lichtfalle

## Patentansprüche

1. Verfahren zur Steuerung eines aus einem Filmaufnahmestrahlengang (S1) einer Laufbildkamera (1) abgezweigten Abbildungsstrahlenganges (S2), der in Abhängigkeit von der Bildaufnahmefrequenz der Laufbildkamera (1) periodisch unterbrochen wird,
**dadurch gekennzeichnet,**
**dass** der Abbildungsstrahlengang (S2) während der Belichtungspause des Laufbildfilmes (10) mittels eines optischen Schaltelements (6) mit konstanter oder variabler Frequenz als Sucherstrahlengang (S3) der Laufbildkamera (1) in eine durch ein Okular (8) zu betrachtende Bildebene oder in eine erste Lichtfalle (13) und synchron zur Belichtungsphase des Laufbildfilms (10) von der durch das Okular (8) zu betrachtenden Bildebene zur ersten Lichtfalle (13) abgelenkt wird.

2. Verfahren zur Steuerung eines aus einem Filmaufnahmestrahlengang (S1) einer Laufbildkamera (1) abgezweigten Abbildungsstrahlenganges (S2), der in Abhängigkeit von der Bildaufnahmefrequenz der Laufbildkamera (1) periodisch unterbrochen wird,
**dadurch gekennzeichnet,**
**dass** der Abbildungsstrahlengang (S2) während der Belichtungspause des Laufbildfilmes (10) mittels eines optischen Schaltelements (7) mit konstanter oder variabler Frequenz als Videostrahlengang (S5) der Laufbildkamera (1) zu einer Videoausspiegelungseinrichtung (9) mit einem optoelektronischen Wandler (92) zur Umwandlung des Videostrahlengangs (S5) in Videosignale (VS) oder in eine zweite Lichtfalle (14) und synchron zur Belichtungsphase des Laufbildfilms (10) von der Videoausspiegelungseinrichtung (9) zur zweiten Lichtfalle (14) abgelenkt wird.

3. Verfahren nach Anspruch 1 und 2, **dadurch gekennzeichnet, dass** der Abbildungsstrahlengang (S2) über einen Strahlenteiler (11) in den Sucherstrahlengang (S3) mit einer durch das Okular (8) zu betrachtenden Bildebene und in den Videostrahlengang (S5) mit dem opto-elektronischen Wandler (92) zur Umwandlung des Videostrahlengangs (S2) in Videosignale (VS) der Laufbildkamera (1) abgelenkt wird.

4. Verfahren nach mindestens einem der voranstehenden Ansprüche, **dadurch gekennzeichnet, dass** das Tastverhältnis der Ablenkung des Abbildungsstrahlenganges (S2)
- als Sucherstrahlengang (S3) in die durch das Okular (8) zu betrachtende Bildebene oder in die erste Lichtfalle (13) und/oder
- als Videostrahlengang (S5) zur Videoausspiegelungseinrichtung (9) oder in die zweite Lichtfalle (14)
verändert wird.

5. Verfahren nach Anspruch 4, **dadurch gekennzeichnet, dass** der Abbildungsstrahlengang (S2) pulsbreitenmoduliert in den Sucherstrahlengang (S3) oder in die erste Lichtfalle (13) und/oder in den Videostrahlengang (S5) oder die zweite Lichtfalle (14) abgelenkt wird.

6. Vorrichtung zur Durchführung des Verfahrens nach mindestens einem der voranstehenden Ansprüche, **gekennzeichnet durch** mindestens einen im Abbildungsstrahlengang (S2) der Laufbildkamera (1) angeordneten DMD-(Digital Micromirror Device)-Chip (6, 7) mit einer Vielzahl rasterförmig angeordneter Mikrospiegel, die elektronisch gesteuert verschwenkbar sind und den einfallenden Abbildungsstrahlengang (S2)
- als Sucherstrahlengang (S3) in eine **durch** ein Okular (8) zu betrachtende Bildebene oder in einen Strahlengang (S4) einer ersten Lichtfalle (13) und/oder
- als Videostrahlengang (S5) zu einer Videoausspiegelungseinrichtung (9) mit einem optoelektronischen Wandler (92) zur Umwandlung des Videostrahlengangs (S5) in Videosignale (VS) oder in einen Strahlengang (S6) einer zweiten Lichtfalle (14)
ablenken.

7. Vorrichtung nach Anspruch 6, **dadurch gekennzeichnet, dass** der Abbildungsstrahlengang (S2) über einen Strahlenteiler (11) in den Sucherstrahlengang (S3) und den Videostrahlengangs (S5) aufgeteilt wird, dass die Mikrospiegel eines im Sucherstrahlengang (S3) angeordneten ersten DMD-Chips (6) den Abbildungsstrahlengang (S2) zur Abbildungsoptik im Sucherstrahlengang (S3) mit einer durch ein Okular (8) zu betrachtenden Bildebene oder in den Strahlengang (S4) der ersten Lichtfalle (13) reflektieren und dass die Mikrospiegel des zweiten DMD-Chips (7) den Abbildungsstrahlengang (S2) zum Videostrahlengang (S5) mit einem optoelektronischen Wandler (92) zur Umwandlung des Videostrahlengangs (S5) in Videosignale (VS) oder in den Strahlengang (S6) der zweiten Lichtfalle (14) ablenken.

8. Vorrichtung nach Anspruch 6, **dadurch gekennzeichnet, dass** zwischen einem ersten DMD-Chip (6) und dem Sucherokular (8) ein Strahlenteiler (11) angeordnet ist, der den Abbildungsstrahlengang (S2) in den Sucherstrahlengang (S3) und den Videostrahlengang (S5) aufteilt und dass die Mikrospiegel des ersten DMD-Chips (6) den Abbildungsstrahlengang (S2) abwechselnd zum Strahlenteiler (11) oder in den Strahlengang (S4) der ersten Lichtfalle (13) reflektieren.

9. Vorrichtung nach Anspruch 8, **dadurch gekennzeichnet, dass** die Mikrospiegel eines zweiten DMD-Chips (7) den Videostrahlengang (S5) zu einem optoelektronischen Wandler (92) zur Umwandlung des Videostrahlengangs (S5) in Videosignale (VS) oder in den Strahlengang (S6) der zweiten Lichtfalle (14) ablenken.

10. Vorrichtung nach mindestens einem der voranstehenden Ansprüche 6 bis 9, **dadurch gekennzeichnet, dass** der erste und/oder der zweite DMD-Chip (6, 7) über eine Treiberschaltung (15) mit einer Steuerschaltung (16) der Laufbildkamera (1) verbunden ist.

## Claims

1. A method for controlling an imaging beam path (S2), which is tapped off from a film recording beam path (S1) of a movie camera (1) and is interrupted periodically as a function of the image recording frequency of the movie camera (1),
**characterized**
**in that** the imaging beam path (S2) is deflected during the exposure pause of the movie film (10) by means of an optical switching element (6) with a constant or variable frequency, as a viewfinder beam path (S3) of the movie camera (1) onto an imaging plane, which can be viewed through an eyepiece (8), or into a first light trap (13) and in synchronism with the exposure phase of the movie film (10) from the image plane which can be viewed through the eyepiece (8) to the first light trap (13).

2. A method for controlling an imaging beam path (S2), which is tapped off from a film recording beam path (S1) of a movie camera (1) and is interrupted periodically as a function of the image recording frequency of the movie camera (1),
**characterized**
**in that** the imaging beam path (S2) is deflected during the exposure pause of the movie film (10) by means of an optical switching element (7) with a constant or variable frequency as a video beam path (S5) of the movie camera (1) to a video output mirror device (9) with an optoelectronic transducer (92) for conversion of the video beam path (S5) to video signals (VS), or into a second light trap (14) and in synchronism with the exposure phase of the movie film (10) from the video output mirror device (9) to the second light trap (14).

3. The method as claimed in claim 1 and 2, **characterized in that** the imaging beam path (S2) is deflected via a beam splitter (11) into the viewfinder beam path (S3) with an image plane which can be viewed through the eyepiece (8), and into the video beam path (S5) with the optoelectronic transducer (92) for conversion of the video beam path (S2) to video signals (VS) from the movie camera (1).

4. The method as claimed in at least one of the preceding claims, **characterized in that** the duty ratio of the deflection of the imaging beam path (S2) is varied
- as viewfinder beam path (S3) into the imaging plane, which can be viewed through an eyepiece (8), or into the first light trap (13) and/or
- as video beam path (S5) to the video output mirror device (9) or into the second light trap (14).

5. The method as claimed in claim 4, **characterized in that** the imaging beam path (S2) is deflected on a pulse-width-modulated basis into the viewfinder beam path (S3)or into the first light trap (13) and/or into the video beam path (S5) or into the second light trap (14).

6. An apparatus for carrying out the method as claimed in at least one of the preceding claims, **characterized by** at least one DMD (Digital Micromirror Device) chip (6, 7) which is arranged in the imaging beam path (S2) of the movie camera (1) and has a large number of micromirrors which are arranged in the form of a raster, can be pivoted under electronic control, and deflect the incident beam path (S2)
- as viewfinder beam path (S3) into an imaging plane, which can be viewed through an eyepiece (8), or into a beam path (S4) of a first light trap (13) and/or
- as video beam path (S5) to a video output mirror device (9) with an optoelectronic transducer (92) for conversion of the video beam path (S5) to video signals (VS) or into a beam path (S6) of a second light trap (14).

7. The apparatus as claimed in claim 6, **characterized in that** the imaging beam path (S2) is split via a beam splitter (11) into the viewfinder beam path (S3) and the video beam path (S5), **in that** the micromirrors of the first DMD chip (6), which is arranged in the viewfinder beam path (S3), reflect the imaging beam path (S2) to the imaging optics in the viewfinder beam path (S3) with an image plane which can be viewed through an eyepiece (8), or into the beam path (S4) of the first light trap (13), and **in that** the micromirrors of the second DMD chip (7) deflect the imaging beam path (S2) to the video beam path (S5) by means of an optoelectronic transducer (92) for conversion of the video beam path (S5) to video signals (VS), or into the beam path (S6) of the second light trap (14).

8. The apparatus as claimed in claim 6, **characterized in that** a beam splitter (11) is arranged between a first DMD chip (6) and the viewfinder eyepiece (8), and splits the imaging beam path (S2) into a viewfinder beam path (S3) and a video beam path (S5), and **in that** the micromirrors of the first DMD chip (6) reflect the imaging beam path (S2) alternately to the beam splitter (11) or into a beam path (S4) of the first light trap (13).

9. The apparatus as claimed in claim 8, **characterized in that** the micromirrors of a second DMD chip (7) deflect the video beam path (S5) to an optoelectronic transducer (92) for conversion of the video beam path (S5) to video signals (VS), or into a beam path (S6) of a second light trap (14).

10. The apparatus as claimed in at least one of the preceding claims 6 to 9, **characterized in that** the first and/or the second DMD chip (6, 7) is connected via a driver circuit (15) to a control circuit (16) for the movie camera (1).

## Revendications

1. Procédé pour la commande d'un trajet du faisceau d'imagerie (S2), dérivé d'un trajet d'un faisceau de prise de vue (S1) d'une caméra cinématographique (1), qui est interrompu périodiquement en fonction de la fréquence de prise de vue de la caméra cinématographique (1), **caractérisé en ce que**
pendant la pause d'exposition du film cinématographique (10), le trajet du faisceau d'imagerie (S2) est dévié ; au moyen d'un élément de commutation optique (6) avec une fréquence constante ou variable en tant que trajet du faisceau de viseur (S3) de la caméra cinématographique (1) vers un plan image à observer à travers un oculaire (8) ou vers un premier piège à lumière (13), et de manière synchrone à la phase d'exposition du film cinématographique (10) ; depuis le plan image à observer à travers l'oculaire vers le premier piège à lumière (13).

2. Procédé pour la commande d'un trajet de faisceau d'imagerie (S2), dérivé depuis un trajet du faisceau de prise de vue (S1) d'une caméra cinématographique (1), qui est interrompu périodiquement en fonction de la fréquence de prise de vue de la caméra cinématographique (1), **caractérisé en ce que**
pendant la pause d'exposition du film cinématographique (10), le trajet du faisceau d'imagerie (S2) est dévié, au moyen d'un élément de commutation optique (7) avec une fréquence constante ou variable en tant que trajet de faisceau vidéo (S5) de la caméra cinématographique (1), vers un dispositif de dérivation vidéo (9) comprenant un convertisseur optoélectronique (92) pour convertir le trajet du faisceau vidéo (S5) en signaux vidéo (VS), ou vers un second piège à lumière (14) et de manière synchrone à la phase d'exposition du film cinématographique (10), depuis le dispositif de dérivation vidéo (9) vers le second piège à lumière (14).

3. Procédé selon les revendications 1 et 2, **caractérisé en ce que** le trajet du faisceau d'imagerie (S2) est dévié, via un diviseur de faisceau (11), vers le trajet du faisceau de viseur (S3) avec un plan image à observer à travers l'oculaire (8), et vers le trajet du faisceau vidéo (S5) avec le convertisseur optoélectronique (92) pour convertir le trajet du faisceau vidéo (S2) en signaux vidéo (VS) de la caméra cinématographique (1).

4. Procédé selon l'une au moins des revendications précédentes, **caractérisé en ce que** le rapport de cadence de la déviation du trajet du faisceau d'imagerie (S2) est modifié
- à titre de trajet de faisceau de viseur (S3) vers le plan image à observer à travers l'oculaire (8) ou vers le premier piège à lumière (13), et/ou
- à titre de trajet du faisceau vidéo (S5) vers le dispositif de dérivation vidéo (9) ou vers le second piège à lumière (14).

5. Procédé selon la revendication 4, **caractérisé en ce que** le trajet du faisceau d'imagerie (S2) est dévié avec modulation en largeur d'impulsion vers le trajet du faisceau de viseur (S3) ou vers le premier piège à lumière (13) et/ou vers le trajet du faisceau vidéo (S5) ou le second piège à lumière (14).

6. Appareil pour mettre en oeuvre le procédé selon l'une au moins des revendications précédentes, **caractérisé par** au moins une puce DMD (Digital Micromirror Device) (6, 7) agencée dans le trajet du faisceau d'imagerie (S2) de la caméra cinématographique (1) avec une pluralité de micro-miroirs agencés en formant une trame, lesquels sont susceptibles d'être pivotés sous une commande électronique, et dévient le trajet du faisceau d'imagerie (S2) incident
- à titre de trajet du faisceau de viseur (S3) dans un plan image à observer à travers un oculaire (8) ou dans un trajet de faisceau (S4) d'un premier piège à lumière (13) et/ou
- à titre de trajet de faisceau vidéo (S5) vers un dispositif de dérivation vidéo (9) avec un convertisseur optoélectronique (92) pour convertir le trajet du faisceau vidéo (S5) en signaux vidéo (VS), ou dans un trajet de faisceau (S6) d'un second piège à lumière (14).

7. Appareil selon la revendication 6, **caractérisé en ce que** le trajet du faisceau d'imagerie (S2) est subdivisé, via un diviseur de faisceau (11), entre le trajet du faisceau de viseur (S3) et le trajet du faisceau vidéo (S5), **en ce que** les micro-miroirs d'une première puce DMD (6) agencée dans le trajet du faisceau de viseur (S3) réfléchissent le trajet du faisceau d'imagerie (S2) vers l'optique d'imagerie dans le trajet du faisceau de viseur (S3) avec un plan image à observer à travers un oculaire (8) ou vers le trajet de faisceau (S4) du premier piège à lumière (13), et **en ce que** les micro-miroirs de la seconde puce DMD (7) dévient le trajet du faisceau d'imagerie (S2) vers le trajet du faisceau vidéo (S5) avec un convertisseur optoélectronique (92) pour convertir le trajet du faisceau vidéo (S5) en signaux vidéo (VS), ou vers le trajet de faisceau (S6) du second piège à lumière (14).

8. Appareil selon la revendication 6, **caractérisé en ce que**, entre une première puce DMD (6) et l'oculaire du viseur (8), un diviseur de faisceau est agencé, le diviseur de faisceau dévie le trajet du faisceau d'imagerie (S2) vers le trajet du faisceau de viseur (S3) et le trajet du faisceau vidéo (S5), et **en ce que** les micro-miroirs de la première puce DMD (6) réfléchissent le trajet du faisceau d'imagerie (S2) alternativement vers le diviseur de faisceau (11) ou vers le trajet de faisceau (S4) du premier piège à lumière (13).

9. Appareil selon la revendication 8, **caractérisé en ce que** les micro-miroirs d'une deuxième puce DMD (7) dévient le trajet du faisceau vidéo (S5) vers un convertisseur optoélectronique (92) pour convertir le trajet du faisceau vidéo (S5) en signaux vidéo (VS) ou vers le trajet de faisceau (S6) du second piège à lumière (14).

10. Appareil selon l'une au moins des revendications 6 a 9, **caractérisé en ce que** la première et/ou la seconde puce DMD (6, 7) est reliée, via un circuit pilote (15), à un circuit de commande (16) de la caméra cinématographique (1).
